# EUROPEAN PATENT SPECIFICATION

(11) **EP 3 518 599 B1**
(45) Date of publication and mention of the grant of the patent: **07.02.2024**
(21) Application number: 17852305.6
(22) Date of filing: 11.09.2017
(51) Int. Cl.: H04L 1/1607, H04W 72/12, H04L 1/1829, H04L 1/1867, H04L 5/00, H04W 72/23

(54) **CONTROL INFORMATION TRANSMISSION METHOD AND APPARATUS**
VERFAHREN UND VORRICHTUNG ZUR ÜBERTRAGUNG VON STEUERUNGSINFORMATIONEN
PROCÉDÉ ET APPAREIL DE TRANSMISSION D'INFORMATIONS DE COMMANDE

(30) Priority: 23.09.2016 CN 201610848347
(43) Date of publication of application: 31.07.2019
(73) Proprietor: ZTE Corporation, Shenzhen, Guangdong 518057 (CN)
(72) Inventor: CHEN, Donglei, Shenzhen Guangdong 518057 (CN); XIA, Shuqiang, Shenzhen Guangdong 518057 (CN); ZUO, Zhisong, Shenzhen Guangdong 518057 (CN); ZHANG, Junfeng, Shenzhen Guangdong 518057 (CN)
(74) Representative: Regimbeau
(86) International application number: PCT/CN2017/101242
(87) International publication number: WO 2018/054237

(56) References cited:
- CN-A- 102 932 299
- CN-A- 102 938 934
- CN-A- 103 460 770
- CN-A- 104 038 312
- US-A1- 2013 336 252
- US-A1- 2015 063 324
- "Enhancements on beamformed CSI-RS", PUB - 3GPP Draft; R1-166324 Enhancements on Beamformed CSI-RS, - 20160813 - 3rd Generation Partnership Project (3GPP), Mobile Competence Centre ; 650, route des Lucioles ; F-06921 Sophia-Antipolis Cedex ; France, XP051132733,

## Description

### TECHNICAL FIELD

The present invention relates to, but is not limited to, mobile communication technologies and, in particular, relates to a control information transmission method and apparatus.

### BACKGROUND

In the long term evolution (LTE), adopting fixed hybrid automatic repeat request timing brings some problems, such as forward compatibility, network deployment limitation, inadaptability of supporting different minimum timing ability by different terminals and different timing requirements of different traffic.

Therefore, in the existing art, the base station may dynamically and/or semi-statically indicates two time relationships to the terminal. The two timing relationships include: timing from reception of downlink data to corresponding uplink HARQ feedback, and timing from reception of uplink authorization to corresponding uplink data transmission. Generally, the semi-static indication may adopt radio resource control (RRC) signaling and the dynamic indication may adopt a physical downlink control channel to transmit downlink control information. For the timing from reception of downlink data to corresponding uplink HARQ feedback, at the time of scheduling most of data, this timing relationship will not change. If the DCI of a fixed size is used for notifying whether the timing relationship changes or not and how to HARQ feedback is performed, including allocation of physical uplink control channel resources to the HARQ feedback, the high requirement on reliability of the DCI brings large wireless resource overhead and power overhead to the DCI. In Verizon 5G protocols, reserved bits of 9 bits totally are adopted to indicate a timing relationship with respect to downlink HARQ and a corresponding physical uplink channel resource allocation method.

In the LTE, cell-specific reference signals (CRS) are always periodically transmitted, even if no data needs to be transmitted in the cell, which will also bring inference to neighboring cells and cause energy consumption. To reduce transmission of such "always-on" signal as much as possible in new radio (NR) (i.e., the transmission of the corresponding signal is triggered only when needed), an aperiodic sounding reference signal (SRS) may be adopted. In the NR, to reduce the delay in data processing, it is considered to place a demodulation reference signal (DMRS) prior to the data; however, in consideration of different channel conditions, more DMRS configurations are needed to implement flexible DMRS configuration in the physical layer. In the NR, for a channel state information-reference signal (CSI-RS), a two-level CSI-RS design may be adopted. A second-level CSI-RS performs long-term transmission and a first-level CSI-RS performs aperiodic transmission according to needs. Generally, the first-level CSI-RS does not need to be transmitted frequently. In addition, at high frequencies, beam-related reference signals also need to be designed as being aperiodically transmitted as needed, and the problem of dynamically selecting a certain configuration to transmit also exists. Although the aperiodic transmission of these downlink reference signals solves some problems brought by periodic transmission of the reference signals, control information configuring the reference signals to transmit aperiodically is transmitted in a manner of the reserved bit on the downlink physical control channel, which will increase resource overhead and power overhead of the downlink control channel. In the case of transmitting the CSI-RS and the beam-related reference signals, a problem of aperiodically reporting of a measurement report also exists, including whether to trigger the measurement report, the type of triggering the measurement report, timing of reporting the measurement report and the adopted physical uplink control channel resources. The base station also triggers the information by adopting an aperiodic control command as needed. In the Verizon 5G protocols, 9 bits are reserved in the physical downlink control channel for indicating the transmission of downlink-relevant reference signals and reporting of the measurement report.

The above two types of control information related to the HARQ feedback, the configuration of the downlink reference signal and the reporting of the measurement report may all be transmitted aperiodically. If they are placed in the downlink control channel and transmitted through the reserved bit, when the control information does not need to be transmitted, additionally overhead of the downlink control channel will be brought, especially at the time of scheduling at a short transmission time interval, and the control channel overhead accounts for a larger proportion. Therefore, for the control information which does not need to be transmitted frequently, a new transmission mechanism needs to be developed and introduced.

The reference US 2013336252 A1 discloses a method of arranging downlink (DL) control information (DCI) for a network of a wireless communication system. The reference CN 102938934A discloses a resource allocation method and device of control channel information and aims at solving the allocation and sending problems of an enhanced downlink control channel enhanced physical downlink control channel (e PDCCH).

### SUMMARY

The invention is set out in the appended set of claims.

### BRIEF DESCRIPTION OF DRAWINGS

FIG. 1 is a flowchart of a control information transmission method according to an embodiment of the present invention (on a base station side);
FIG. 2 is a flowchart of a control information transmission method according to an embodiment of the present invention (on a terminal side);
FIG. 3 is a schematic diagram of a control information transmission apparatus according to an embodiment of the present invention (on a base station);
FIG. 4 is a schematic diagram of a control information transmission apparatus according to an embodiment of the present invention (on a terminal);
FIG. 5 is a schematic diagram one illustrating multiplexing of a physical downlink data channel for third control information and downlink data;
FIG. 6 is a schematic diagram two illustrating multiplexing of a physical downlink data channel for third control information and downlink data;
FIG. 7 is a schematic diagram illustrating a processing of multiplexing for third control information and downlink data;
FIG. 8 is a schematic diagram of timing of HARQ feedback of downlink data;
FIG. 9 is a schematic diagram of transmission of CSI-RS and triggering of corresponding reporting of a measurement report;
FIG. 10 is a schematic diagram of configuring transmission of DMRS; and
FIG. 11 is schematic diagram of transmitting second control information in a physical downlink data channel.

### DETAILED DESCRIPTION

Embodiments of the present invention will be described below in detail in conjunction with the drawings. It is to be noted that if not in collision, the embodiments and features therein in the present application may be combined with each other.

In NR, HARQ feedback of downlink data will introduce dynamic timing indication, flexible configuration of transmission of relevant reference signals, and aperiodic triggering of reporting a measurement report based on the reference signals as needed, so that the network is capable of more flexibly supporting different scenarios. For the timing from the downlink data to corresponding uplink HARQ feedback, at the time of scheduling most of data, this timing relationship will not change. If the DCI of a fixed size is used for notifying whether the timing relationship changes or not and how the HARQ feedback is performed, including allocating physical uplink control channel resources to the HARQ feedback, the high reliability requirement on reliability of DCI brings large wireless resource overhead and power overhead to the DCI. For dynamic timing indication, in most cases, default timing relationship and implicit resource allocation may be adopted. In the existing LTE, the timing of HARQ feedback is equal to n+4. A resource indication of the physical uplink control channel for the HARQ feedback is generated according to the position of a control channel element (CCE), and only in a few cases, it is necessary to dynamically change the timing of the HARQ feedback and relevant resource allocation of the physical uplink control channel. Meanwhile, the transmission of these pieces of control information is usually accompanied by the transmission of downlink data, so it may be considered to perform multiplexing between these pieces of control information and the downlink data. When these pieces of control information do not need to be transmitted, resources for transmitting these pieces of control information may be used for transmitting data, thereby improving resource utilization. For the transmission of the relevant reference signals, these reference signals may be not transmitted in the current time interval or subframe by default or may be transmitted according to a certain default configuration. Only when the transmission mode needs to be changed, transmission of specific control information is performed.

A control domain may be set in the physical downlink data channel to indicate whether these pieces of control information are transmitted in the physical downlink data channel. In the present application, the physical downlink data channel refers to the physical downlink share channel (PDSCH). Regardless of whether to transmit these control information or not, the physical downlink control channel is provided with the same load size, thereby reducing blind detection times. The transmission of these pieces of control information will be fixed to a certain position in the downlink resource area, so that it does not need to be indicated by the physical downlink control channel each time the control information needs to be transmitted, thereby reducing the overhead of the control channel. The specific fixed position may be agreed in standards, and may also be configured by a RRC message. Moreover, these pieces of control information should be transmitted prior to data. On one hand, the DMRS is transmitted prior to the data in the NR so as to reduce data processing on the terminal. As such, these pieces of control information, which are transmitted prior to the data, will get closer to the DMRS, so that these pieces of control information can be received reliably. In addition, the configuration of relevant control information by the reference signals may trigger to transmit the downlink reference signal in the downlink resource area for subsequent downlink data channel transmission in the time interval or subframe, the downlink data is punctured. Therefore, in order to correctly demodulate the data, the terminal also needs to acquire there pieces of control information earlier. Finally, to improve reliability of the control information which is multiplexed with the downlink data, the control information may be transmitted in an encoding mode different from that of the data and with a transmission power higher than that of the data.

When no downlink or uplink data is transmitted, a control information domain related to downlink data demodulation may be reused for indicating the transmission of the reference signal and the reporting configuration of the measurement report. In this way, the physical downlink control channel needs to be provided with a control information domain for indicating whether the current physical downlink control channel is used for transmitting information related to the demodulation of the physical downlink data channel. When the information related to the demodulation of the physical downlink data channel is not transmitted in the current physical downlink control channel, information for indicating the transmission of the reference signal and the reporting configuration of the measurement report is transmitted in the physical downlink control channel.

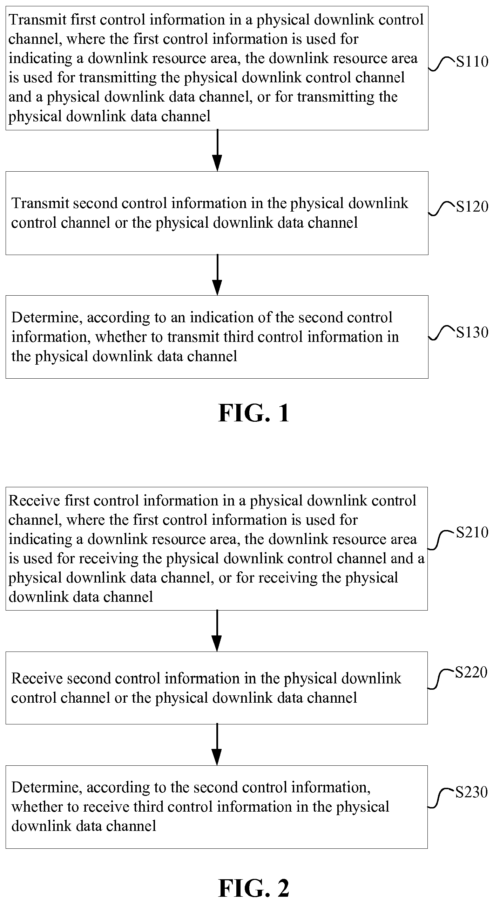

As shown in FIG. 1, an embodiment of the present invention provides a control information transmission method, applied to a base station. The method includes steps described below.

In step S 110, first control information is transmitted in a physical downlink control channel. The first control information is used for indicating a downlink resource area. The downlink resource area is used for transmitting the physical downlink control channel and a physical downlink data channel, or for transmitting the physical downlink data channel.

In step S120, second control information is transmitted in the physical downlink control channel or the physical downlink data channel.

In step S130, whether to transmit third control information in the physical downlink data channel is determined according to the second control information.

The second control information is used for indicating whether to transmit the third control information in the physical downlink data channel.

Optionally, the step in which whether to transmit the third control information in the physical downlink data channel is determined according to the second control information includes following steps:
when the second control information indicates to transmit the third control information in the physical downlink data channel, the third control information and downlink data is transmitted in a manner of:
performing multiplexing of the downlink resource area corresponding to the physical downlink data channel for the third control information and the downlink data, and mapping the third control information to a position predetermined in the downlink resource area corresponding to the physical downlink data channel.

Optionally, the step in which whether to transmit the third control information in the physical downlink data channel is determined according to the second control information includes a following step:
when the second control information indicates not to transmit the third control information in the physical downlink data channel, the downlink data is transmitted on a position predetermined for transmitting the third control information in the downlink resource area corresponding to the physical downlink data channel.

Optionally, the position predetermined for transmitting the third control information in the downlink resource area corresponding to the physical downlink data channel is pre-notified by the base station to a terminal through a radio resource control (RRC) message or is pre-agreed according to a pre-defined rule without notification.

Optionally, the step in which whether to transmit the third control information in the physical downlink data channel is determined according to the second control information includes a following step:
when the second control information indicates not to transmit the third control information in the physical downlink data channel, one or more parameters in the third control information are generated according to a default value and/or a pre-defined rule; where the default value is configured to a terminal by the base station through radio resource control (RRC) signaling or is pre-agreed according to a pre-defined rule without notification.

Additionally, in a time domain, a symbol in which an ending position of transmitting the third control information is located is prior to a symbol in which a starting position of transmitting the downlink data is located, or the ending position of transmitting the third control information and the starting position of transmitting the downlink data are located in a same symbol.

Optionally, the step in which whether to transmit the third control information in the physical downlink data channel is determined according to the second control information includes following steps:
when the second control information indicates to transmit the third control information in the physical downlink data channel, transmitting the third control information in a manner of: encoding the third control information in a channel encoding mode different from a channel encoding mode of the downlink data, and modulating the third control information in a modulation mode the same with a modulation mode of the downlink data and mapping the third control information to the predetermined position to transmit.

The modulation mode includes one of: quadrature phase shift keying (QPSK), 16 quadrature amplitude modulation (QAM), 64 QAM and 256 QAM.

Optionally, the step in which whether to transmit the third control information in the physical downlink data channel is determined according to the second control information includes a following step:
when the second control information indicates to transmit the third control information in the physical downlink data channel, when the physical downlink data channel uses more than one layer, the third control information is transmitted on each of the more than one layer.

Optionally, the step in which whether to transmit the third control information in the physical downlink data channel is determined according to the second control information includes a following step:
when the second control information indicates to transmit the third control information in the physical downlink data channel, and when the physical downlink control channel uses more than one layer and the physical downlink control channel performs space-division multiplexing, transmitting the third control information in a manner of: performing the space-division for the third control information and the downlink data in a highest modulation encoding mode, and transmitting the third control information on each layer to which the downlink data in the highest modulation encoding mode is mapped.

Optionally, the third control information and the downlink data have different power offsets relative to a demodulation reference signal.

Optionally, the second control information has a length of 1 bit.

Optionally, the third control information includes at least one of: control information related to transmission of a downlink reference signal, and control information related to hybrid automatic repeat request (HARQ) feedback.

Optionally, the third control information include at least one of following parameters:
transmission timing information for indicating a physical uplink control channel carrying uplink HARQ feedback and corresponding to the downlink data,
resource indication information for indicating the physical uplink control channel carrying the uplink HARQ feedback and corresponding to the downlink data,
indication information for indicating a position of uplink HARQ feedback information corresponding to current downlink data in a predetermined sequence, where the predetermined sequence comprises a plurality of pieces of uplink HARQ feedback information transmitted in a physical uplink control channel indicated by the resource indication information,
configuration information related to transmission of a demodulation reference signal,
configuration information related to transmission of a channel state information reference signal,
configuration information related to a beam-related reference signal,
control information related to reporting of a measurement report of the channel state information reference signal, and
control information related to reporting of a measurement report of the beam-related reference signal.

As shown in FIG. 2, an embodiment of the present invention provides a control information transmission method, applied to a terminal. The method includes steps described below.

In step S210, first control information is received in a physical downlink control channel. The first control information is used for indicating a downlink resource area. The downlink resource area is used for receiving the physical downlink control channel and a physical downlink data channel, or for receiving the physical downlink data channel.

In step S220, second control information is received in the physical downlink control channel or the physical downlink data channel.

In step S230, whether to receive third control information in the physical downlink data channel is determined according to the second control information.

Optionally, the step in which whether to receive the third control information in the physical downlink data channel is determined according to the second control information includes a following step:
when the second control information indicates to receive the third control information in the physical downlink data channel, the third control information is received in a manner of: performing multiplexing of the downlink resource area corresponding to the physical downlink data channel for the third control information and the downlink data, and receiving the third control information on a position predetermined for receiving the third control information in the downlink resource area corresponding to the physical downlink data channel.

Optionally, the step in which whether to receive the third control information in the physical downlink data channel according to the second control information includes a following step:
when the second control information indicates not to receive the third control information in the physical downlink data channel, the downlink data is received on a position predetermined for receiving the third control information in the physical downlink data channel.

Optionally, the position predetermined for receiving the third control information in the downlink resource area corresponding to the physical downlink data channel is obtained through a radio resource control message pre-transmitted by a base station, or obtained according to a pre-defined rule without notification.

Optionally, the step in which whether to receive the third control information in the physical downlink data channel is determined according to the second control information includes a following step:
when the second control information indicates not to receive the third control information in the physical downlink data channel, one or more parameters in the third control information are obtained according to a default value and/or a pre-defined rule; where the default value is configured through a RRC signaling transmitted by the base station or is pre-agreed according to a pre-defined rule without notification.

Additionally, in a time domain, a symbol in which an ending position of receiving the third control information is located is prior to a symbol in which a starting position of receiving the downlink data is located, or the ending position of transmitting the third control information and the starting position of receiving the downlink data are located in a same symbol.

Optionally, the step in which whether to receive the third control information in the physical downlink data channel is determined according to the second control information includes a following step:
when the second control information indicates to receive the third control information in the physical downlink data channel, receiving the third control information in a manner of: decoding the third control information in a channel decoding mode different from a channel decoding mode of the downlink data, and demodulating the third control information in a demodulation mode the same with a demodulation mode of the downlink data on the predetermined position.

The demodulation mode includes one of: a demodulation mode corresponding to QPSK, a demodulation mode corresponding to 16 QAM, a demodulation mode corresponding to 64 QAM and a demodulation mode corresponding to 256 QAM.

Optionally, the step in which whether to receive the third control information in the physical downlink data channel is determined according to the second control information includes a following step:
when the second control information indicates to receive the third control information in the physical downlink data channel, and when the physical downlink data channel uses more than one layer, the third control information is received on each of the more than one layer.

Optionally, the step in which whether to receive the third control information in the physical downlink data channel is determined according to the second control information includes a following step:
when the second control information indicates to receive the third control information in the physical downlink data channel, and when the physical downlink data channel uses more than one layer and that the physical downlink data channel performs space-division multiplexing, the third control information is received on each layer to which the downlink data in the highest modulation encoding mode is mapped.

Optionally, the second control information has a length of 1 bit.

Optionally, the third control information includes at least one of: control information related to transmission of a downlink reference signal, and control information related to HARQ feedback.

Optionally, the third control information include at least one of following parameters:
transmission timing information for indicating a physical uplink control channel carrying uplink HARQ feedback and corresponding to the downlink data,
resource indication information for indicating the physical uplink control channel carrying the uplink HARQ feedback and corresponding to the downlink data,
indication information for indicating a position of uplink HARQ feedback information corresponding to current downlink data in a predetermined sequence, where the predetermined sequence comprises a plurality of pieces of uplink HARQ feedback information transmitted in a physical uplink control channel indicated by the resource indication information,
configuration information related to transmission of a demodulation reference signal,
configuration information related to transmission of a channel state information reference signal,
configuration information related to a beam-related reference signal,
control information related to reporting of a measurement report of the channel state information reference signal, and
control information related to reporting of a measurement report of the beam-related reference signal.

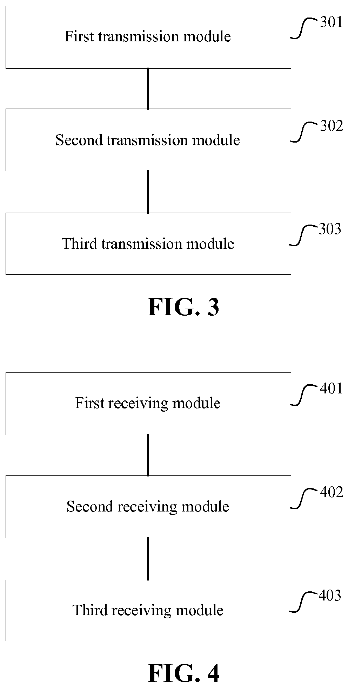

As shown in FIG. 3, an embodiment of the present invention provides a control information transmission apparatus, applied to a base station. The apparatus includes a first transmission module 301, a second transmission module 302 and a third transmission module 303.

The first transmission module 301 configured to transmit first control information in a physical downlink control channel, where the first control information is used for indicating a downlink resource area, the downlink resource area is used for transmitting the physical downlink control channel and a physical downlink data channel, or for transmitting the physical downlink data channel.

The second transmission module 302 is configured to transmit second control information in the physical downlink control channel or the physical downlink data channel.

The third transmission module 303 is configured to determine, according to the second control information, whether to transmit third control information in the physical downlink data channel.

The second control information is used for indicating whether to transmit the third control information in the physical downlink data channel.

Optionally, the third transmission module 303 is configured to determine, according to the second control information, whether to transmit the third control information in the physical downlink data channel in the following manner:
when the second control information indicates to transmit the third control information in the physical downlink data channel, transmitting the third control information and downlink data is transmitted in a manner of: performing multiplexing of the downlink resource area corresponding to the physical downlink data channel for the third control information and the downlink data, and mapping the third control information to a position predetermined for transmitting the third control information in the downlink resource area corresponding to the physical downlink data channel.

Optionally, the third transmission module 303 is configured to determine, according to the second control information, whether to transmit the third control information in the physical downlink data channel in the following manner:
when the second control information indicates not to transmit the third control information in the physical downlink data channel, the downlink data is transmitted on a position predetermined for transmitting the third control information in the downlink resource area corresponding to the physical downlink data channel.

Optionally, the predetermined position for transmitting the third control information in the downlink resource area corresponding to the physical downlink data channel is pre-notified by the base station to a terminal through a radio resource control (RRC) message or is pre-agreed according to a pre-defined rule without notification.

Optionally, the third transmission module 303 is configured to determine, according to the second control information, whether to transmit the third control information in the physical downlink data channel in the following manner:
when the second control information indicates not to transmit the third control information in the physical downlink data channel, one or more parameters in the third control information are generated according to a default value and/or a pre-defined rule; where the default value is configured to a terminal by the base station through RRC signaling or is pre-agreed according to a pre-defined rule without notification.

Additionally, in a time domain, a symbol in which an ending position of transmitting the third control information is located is prior to a symbol in which a starting position of transmitting the downlink data is located, or the ending position of transmitting the third control information and the starting position of transmitting the downlink data are located in a same symbol.

Optionally, the third transmission module 303 is configured to determine, according to the second control information, whether to transmit the third control information in the physical downlink data channel in the following manner:
when the second control information indicates to transmit the third control information in the physical downlink data channel, the third control information is transmitted in a manner of: encoding the third control information in a channel encoding mode different from a channel encoding mode of the downlink data, and modulating the third control information in a modulation mode the same with a modulation mode of the downlink data and mapping the third control information to the predetermined position to transmit.

The modulation mode includes one of: QPSK, 16 QAM, 64 QAM and 256 QAM.

Optionally, the third transmission module 303 is configured to determine, according to the second control information, whether to transmit the third control information in the physical downlink data channel in the following manner:
when the second control information indicates to transmit the third control information in the physical downlink data channel, and when the physical downlink data channel uses more than one layer, the third control information is transmitted on each of the more than one layer.

Optionally, the third transmission module 303 is configured to determine, according to the second control information, whether to transmit the third control information in the physical downlink data channel in the following manner:
when the second control information indicates to transmit the third control information in the physical downlink data channel, and when the physical downlink control channel uses more than one layer and that the physical downlink control channel performs space-division multiplexing, the third control information is transmitted in a manner of: performing the space-division multiplexing for the third control information and the downlink data in a highest modulation encoding mode, and transmitting the third control information on each layer to which the downlink data in the highest modulation encoding mode is mapped.

Optionally, the third control information and the downlink data have different power offsets relative to a demodulation reference signal.

Optionally, the second control information has a length of 1 bit.

Optionally, the third control information includes at least one of: control information related to transmission of a downlink reference signal, and control information related to HARQ feedback.

Optionally, the third control information include at least one of following parameters:
transmission timing information for indicating a physical uplink control channel carrying uplink HARQ feedback and corresponding to the downlink data,
resource indication information for indicating the physical uplink control channel carrying the uplink HARQ feedback and corresponding to the downlink data,
indication information for indicating a position of uplink HARQ feedback information corresponding to current downlink data in a predetermined sequence, where the predetermined sequence comprises a plurality of pieces of uplink HARQ feedback information transmitted in a physical uplink control channel indicated by the resource indication information,
configuration information related to transmission of a demodulation reference signal,
configuration information related to transmission of a channel state information reference signal,
configuration information related to a beam-related reference signal,
control information related to reporting of a measurement report of the channel state information reference signal, and
control information related to reporting of a measurement report of the beam-related reference signal.

As shown in FIG. 4, an embodiment of the present invention provides a control information transmission apparatus, applied to a terminal. The apparatus includes a first receiving module 401, a second receiving module 402 and a third receiving module 403.

The first receiving module 401 is configured to receive first control information in a physical downlink control channel, where the first control information is used for indicating a downlink resource area, the downlink resource area is used for receiving the physical downlink control channel and a physical downlink data channel, or for receiving the physical downlink data channel.

The second receiving module 402 is configured to receive second control information in the physical downlink control channel or the physical downlink data channel.

The third receiving module 403 is configured to determine, according to the second control information, whether to receive third control information in the physical downlink data channel.

Optionally, the third receiving module 403 is configured to determine, according to the second control information, whether to receive the third control information in the physical downlink data channel in the following manner:
when the second control information indicates to receive the third control information in the physical downlink data channel, the third information is received in a manner of: performing multiplexing of the downlink resource area corresponding to the physical downlink data channel for the third control information and the downlink data, and receiving the third control information on a position predetermined for receiving the third control information in the downlink resource area corresponding to the physical downlink data channel.

Optionally, the third receiving module 403 is configured to determine, according the second control information, whether to receive the third control information in the physical downlink data channel in the following manner:
when the second control information indicates not to receive the third control information in the physical downlink data channel, the downlink data is received on a position predetermined for receiving the third control information in the physical downlink data channel.

Optionally, the position predetermined for receiving the third control information in the downlink resource area corresponding to the physical downlink data channel is obtained through a RRC message pre-transmitted by a base station, or obtained according to a pre-defined rule without notification.

Optionally, the third receiving module 403 is configured to determine, according to the indication of the second control information, whether to receive the third control information in the physical downlink data channel in the following manner:
when the second control information indicates not to receive the third control information in the physical downlink data channel, one or more parameters in the third control information are obtained according to a default value and/or a pre-defined rule; where the default value is configured through a RRC signaling transmitted by the base station or is pre-agreed according to a pre-defined rule without notification.

Additionally, in a time domain, a symbol in which an ending position of receiving the third control information is located is prior to a symbol in which a starting position of receiving the downlink data is located, or the ending position of transmitting the third control information the starting position of receiving the downlink data are located in a same symbol.

Optionally, the third receiving module 403 is configured to determine, according to the second control information, whether to receive the third control information in the physical downlink data channel in the following manner:
when the second control information indicates to receive the third control information in the physical downlink data channel, the third control information is received in a manner of: decoding the third control information in a channel decoding mode different from a channel decoding mode of the downlink data, and demodulating the third control information in a demodulation mode the same with a demodulation mode of the downlink data on the predetermined position.

The demodulation mode includes one of: a demodulation mode corresponding to QPSK, a demodulation mode corresponding to 16 QAM, a demodulation mode corresponding to 64 QAM and a demodulation mode corresponding to 256 QAM.

Optionally, the third receiving module 403 is configured to determine, according to the second control information, whether to receive the third control information in the physical downlink data channel in the following manner:
when the second control information indicates to receive the third control information in the physical downlink data channel, and when the physical downlink data channel uses more than one layer, the third control information is received on each of the more than one layer.

Optionally, the third receiving module 403 is configured to determine, according to the second control information, whether to receive the third control information in the physical downlink data channel in the following manner:
when the second control information indicates to receive the third control information in the physical downlink data channel, and when the physical downlink data channel uses more than one layer and that the physical downlink data channel performs space-division multiplexing, the third control information is received on each layer to which the downlink data in the highest modulation encoding mode is mapped.

Optionally, the second control information has a length of 1 bit.

Optionally, the third control information includes at least one of: control information related to transmission of a downlink reference signal, and control information related to HARQ feedback.

Optionally, the third control information include at least one of following parameters:
transmission timing information for indicating a physical uplink control channel carrying uplink HARQ feedback and corresponding to the downlink data,
resource indication information for indicating the physical uplink control channel carrying the uplink HARQ feedback and corresponding to the downlink data,
indication information for indicating a position of uplink HARQ feedback information corresponding to current downlink data in a predetermined sequence, where the predetermined sequence comprises a plurality of pieces of uplink HARQ feedback information transmitted in a physical uplink control channel indicated by the resource indication information,
configuration information related to transmission of a demodulation reference signal,
configuration information related to transmission of a channel state information reference signal,
configuration information related to a beam-related reference signal,
control information related to reporting of a measurement report of the channel state information reference signal, and
control information related to reporting of a measurement report of the beam-related reference signal.

### Embodiment one

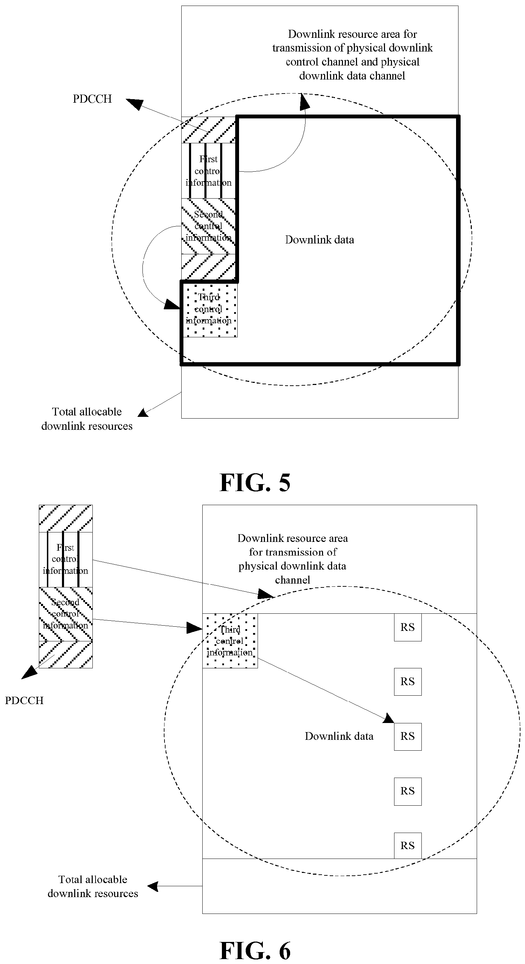

FIG. 5 is a schematic diagram illustrating multiplexing between control information related to HARQ feedback and downlink data. In this schematic diagram, third control information is the control information related to the HARQ feedback and includes timing of HARQ feedback, resource allocation of physical uplink control channel (PUCCH) for the HARQ feedback.

In a case of this schematic diagram, a downlink resource area indicated by first control information is multiplexed for a physical downlink control channel and a physical downlink data channel. The first control information is resource allocation information. Second control information is 1-bit information for indicating whether to multiplex the physical downlink data channel for the control information related to the HARQ feedback. When the 1-bit information is 0, it represents that the control information related to the HARQ feedback adopts default configuration, and does not need to acquire information from the physical downlink data channel. When the 1-bit inforamtion is 1, it represents that the control information related to the HARQ feedback needs to adopt information multiplexed on the physical downlink data channel.

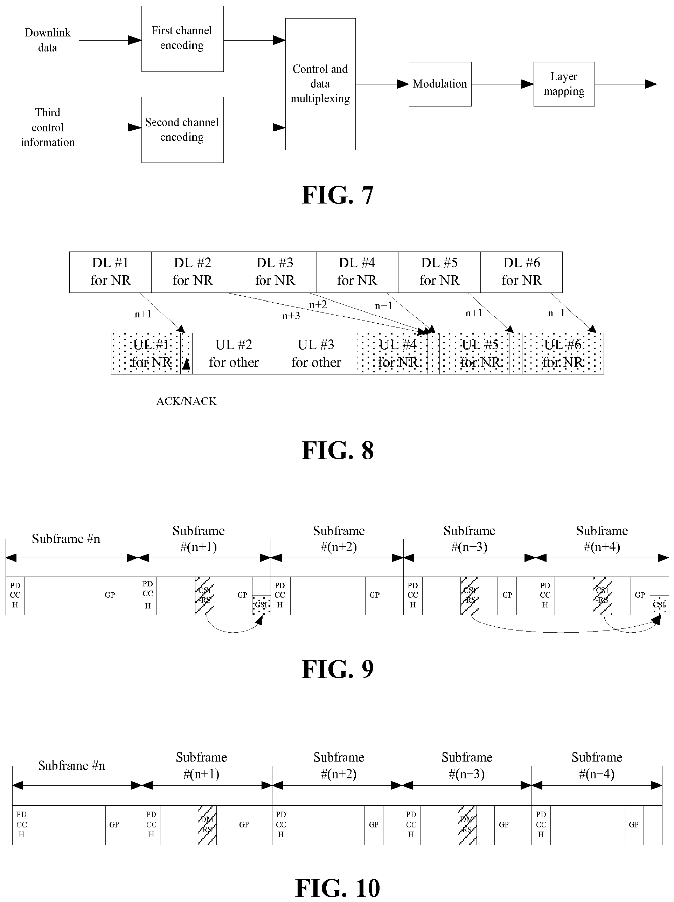

FIG. 8 is a flowchart of dynamic timing indication when minimum timing of HARQ feedback of the downlink data of a terminal is n+1 in a case of frequency division duplex (FDD). For downlink subframes #1, #5 and #6, the terminal adopts the minimum timing of HARQ feedback by default. In this case, the PUCCH resource allocation for feedback is obtained from calculation of a position of the CCE of the PDCCH in the LTE. The 1-bit second control information in the PDCCH equal to 0 indicates that the terminal only needs to feed back HARQ information according to an agreed timing relationship and a PUCCH resource allocation rule. In this case, the predetermined position for the control information related to HARQ transmission is used for transmitting downlink data. For downlink subframes #2, #3 and #4, since uplink subframes #2 and #3 are used for other non-NR traffic, HARQ feedback of multiple downlink subframes are all transmitted on an uplink subframe #4. In this case, at the time of scheduling the downlink subframes #2, #3 and #4, the 1-bit second control information in the PDCCH is 1 and indicates to the terminal that the control information related to HARQ feedback of the current downlink data are multiplexed on the physical downlink data channel. Since the control information related to HARQ feedback is transmitted on a predetermined position in the downlink resource area indicated by the first control information, the terminal only needs to receive the relevant control information on this position.

FIG. 7 is a schematic diagram illustrating multiplexing between third control information and downlink data. When the third control information is the control information related to HARQ feedback, the third control information and the downlink data are encoded using different encoding schemes, multiplexed, modulated according to the modulation mode indicated by the base station, and are subjected to layer mapping. When the physical downlink data channel uses more than one layer and that the physical downlink data channel performs space-division multiplexing, the control information related to HARQ feedback is transmitted on each layer to which the downlink data in the highest modulation encoding mode is mapped. When the physical downlink data channel uses more than one layer and the space-division multiplexing is not adopted, the control information related to HARQ feedback is transmitted on each of the more than one layer.

### Embodiment two

FIG. 6 is a schematic diagram illustrating multiplexing between control information related to CSI-RS configuration and downlink data. In this schematic diagram, third control information is the control information related to the CSI-RS configuration, also includes control information related to reporting of a measurement report corresponding to a CSI-RS, such as CSI timing and PUCCH resource allocation for feedback. In a case of this schematic diagram, a physical downlink data channel is located in a downlink resource area indicated by first control information. The first control information is resource allocation information. Second control information located in a physical downlink control channel is 1-bit information for indicating whether to multiplex the physical downlink data channel for the control information related to the CSI-RS configuration and/or control information related to CSI feedback. When the 1-bit information is 0, it represents that the control information related to the CSI-RS configuration adopts default configuration. When the 1-bit information is 1, it represents that the control information related to the CSI-RS configuration needs to adopt information multiplexed on the physical downlink data channel. FIG. 9 is a process of transmission of CSI-RS and triggering of corresponding reporting of the measurement report in a case of TDD. For subframes #n and #(n+2), a base station does not transmit CSI-RS and trigger a terminal to perform CSI reporting by default, the 1-bit second control information in the PDCCH equaling to 0 indicates that the terminal does not need to receive CSI-RS or feedback CSI in the current subframe, and no corresponding control information is transmitted in the physical downlink data channel. In this case, a position predetermined for the control information related to the transmission of the CSI-RS configuration is used for the transmission of the downlink data. For downlink subframes #(n+1), #(n+3) and #(n+4), the base station transmits the CSI-RS and requires the terminal to report the CSI in subframes #(n+1) and #(n+4). In this case, the 1-bit second control information in the PDCCH equaling to 1 indicates that the terminal needs to receive the control information related to the CSI-RS configuration and the control information related to the CSI feedback in the current subframe. Since the control information related to CSI-RS configuration and/or the control information related to the CSI feedback are transmitted on a predetermined position in the downlink resource area indicated by the first control information, the terminal only needs to receive the relevant control information on this position.

FIG. 7 is schematic diagram illustrating multiplexing between third control information and downlink data. When the third control information is the control information related to CSI-RS configuration, the third control information and the downlink data are encoded using different encoding schemes, multiplexed, modulated according to the modulation mode indicated by the base station, and are subjected to layer mapping. When the physical downlink data channel uses more than one layer, the control information related to CSI-RS configuration is transmitted on each of the more than one layer.

### Embodiment three

FIG. 10 is a schematic diagram of configuring transmission of DMRS. There are no additional DMRSs configured to be transmitted on subframes #n, #(n+2) and #(n+4) by default. In this case, the 1-bit second control information in the PDCCH is 0, it represents that control information related to DMRS configuration is not multiplexed in a physical downlink data channel and the additional DMRS signals are not configured to be transmitted on the current subframes. In this case, a predetermined position for control information related to the transmission of DMRS configuration is used for transmission of the downlink data. Additional DMRSs need to be transmitted on subframes #(n+1) and #(n+3). In this case, the 1-bit second control information in the PDCCH is 1, it represents that the control information related to additional DMRS configuration is multiplexed in the physical downlink data channel. According to the configuration information, the terminal receives DMRS signals in the predetermined position.

### Embodiment four

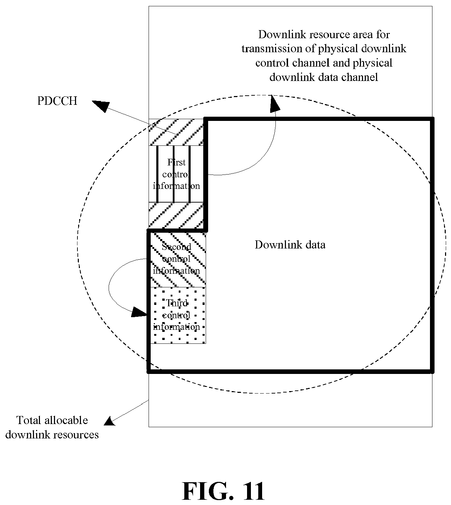

FIG. 11 is a schematic diagram of transmitting second control information in a physical downlink data channel. In this embodiment, the second control information is transmitted in a downlink resource area indicated by first control information. In this downlink resource area, the physical downlink data channel is multiplexed for the second control information and the downlink data. Before a terminal detects whether third control information is provided in the physical downlink data channel, the terminal firstly detects second control information on a predetermination position. According to a value of the second control information, whether the physical downlink data channel is multiplexed for the third control information is determined.

Embodiments of the present invention further provide a computer-readable storage medium configured to store computer-executable instructions for executing the control information transmission methods described above when executed by a processor.

It should be understood by those skilled in the art that all or some steps in the methods described above may be implemented by relevant hardware (such as a processor) as instructed by programs, and the programs may be stored in a computer-readable storage medium, such as a read-only memory, a magnetic disk, an optical disk or the like. Optionally, all or some steps in the embodiments described above may also be implemented by using one or more integrated circuits. Accordingly, the modules/units in the embodiments described above may be implemented by hardware. For example, the functions of these modules/units may be implemented by one or more integrated circuits. Alternatively, these modules/units may be implemented by software function modules. For example, the functions of these modules/units may be implemented by using a processor to execute program instructions stored in a storage medium. The present application is not limited to any specific combination of hardware and software.

## Claims

1. A control information transmission method, applied to a base station, comprising:
transmitting first control information in a physical downlink control channel, wherein the first control information is used for indicating a downlink resource area, the downlink resource area is used for transmitting the physical downlink control channel and a physical downlink data channel, or for transmitting the physical downlink data channel;
transmitting second control information in the physical downlink control channel or the physical downlink data channel; and
determining, according to the second control information, whether to transmit third control information in the physical downlink data channel,
wherein the first control information, the second control information, and the third control information are transmitted in a same slot,
wherein in a time domain, a symbol in which an ending position of transmitting the third control information is located is prior to a symbol in which a starting position of transmitting the downlink data is located, or
the ending position of transmitting the third control information and the starting position of transmitting the downlink data are located in a same symbol.

2. The method according to claim 1, wherein determining, according to the second control information, whether to transmit the third control information in the physical downlink data channel comprises:
in response to determining that the second control information indicates to transmit the third control information in the physical downlink data channel, transmitting the third control information and downlink data in a manner of:
performing multiplexing of the downlink resource area corresponding to the physical downlink data channel for the third control information and the downlink data, and
mapping the third control information to a position predetermined for transmitting the third control information in the downlink resource area corresponding to the physical downlink data channel,
wherein the position predetermined for transmitting the third control information in the downlink resource area corresponding to the physical downlink data channel is pre-notified by the base station to a terminal through a radio resource control message or is pre-agreed according to a pre-defined rule without notification.

3. The method according to claim 1, wherein determining, according to the second control information, whether to transmit the third control information in the physical downlink data channel comprises:
in response to determining that the second control information indicates not to transmit the third control information in the physical downlink data channel,
transmitting downlink data on a position predetermined for transmitting the third control information in the downlink resource area corresponding to the physical downlink data channel,
wherein the position predetermined for transmitting the third control information in the downlink resource area corresponding to the physical downlink data channel is pre-notified by the base station to a terminal through a radio resource control message or is pre-agreed according to a pre-defined rule without notification.

4. The method according to claim 1, wherein determining, according to the second control information, whether to transmit the third control information in the physical downlink data channel comprises:
in response to determining that the second control information indicates not to transmit the third control information in the physical downlink data channel, generating one or more parameters in the third control information according to a default value and/or a pre-defined rule; wherein the default value is configured to the terminal by the base station through radio resource control signaling or is pre-agreed according to a pre-defined rule without notification.

5. The method according to claim 1 or 2, wherein determining, according to the second control information, whether to transmit the third control information in the physical downlink data channel comprises:
in response to determining that the second control information indicates to transmit the third control information in the physical downlink data channel, transmitting the third control information in a manner of:
encoding the third control information in a channel encoding mode different from a channel encoding mode of the downlink data, and
modulating the third control information in a modulation mode the same with a modulation mode of the downlink data and mapping the third control information to the predetermined position to transmit;
wherein the modulation mode comprises one of: quadrature phase shift keying, QPSK, 16 quadrature amplitude modulation, QAM, 64 QAM and 256 QAM.

6. The method according to claim 1 or 2, wherein determining, according to the second control information, whether to transmit the third control information in the physical downlink data channel comprises:
in response to determining that the second control information indicates to transmit the third control information in the physical downlink data channel, and in response to determining that the physical downlink data channel uses more than one layer, transmitting the third control information on each of the more than one layer.

7. The method according to claim 1 or 2, wherein determining, according to the second control information, whether to transmit the third control information in the physical downlink data channel comprises:
in response to determining that the second control information indicates to transmit the third control information in the physical downlink data channel, and in response to determining that the physical downlink control channel uses more than one layer and that the physical downlink control channel performs space-division multiplexing, transmitting the third control information in a manner of:
performing the space-division multiplexing for the third control information and the downlink data in a highest modulation encoding mode, and
transmitting the third control information on each layer to which the downlink data in the highest modulation encoding mode is mapped.

8. The method according to claim 1 or 2, wherein the third control information and the downlink data have different power offsets relative to a demodulation reference signal.

9. The method according to claim 1, wherein the second control information has a length of 1 bit.

10. The method according to claim 1, 2 3 or 4, wherein the third control information comprises at least one of: control information related to transmission of a downlink reference signal, and control information related to hybrid automatic repeat request, HARQ, feedback.

11. The method according to claim 1, 2 3 or 4, wherein the third control information comprises at least one of following parameters:
transmission timing information for indicating a physical uplink control channel carrying uplink HARQ feedback and corresponding to the downlink data,
resource indication information for indicating the physical uplink control channel carrying the uplink HARQ feedback and corresponding to the downlink data,
indication information for indicating a position of uplink HARQ feedback information corresponding to current downlink data in a predetermined sequence, wherein the predetermined sequence comprises a plurality of pieces of uplink HARQ feedback information transmitted in a physical uplink control channel indicated by the resource indication information,
configuration information related to transmission of a demodulation reference signal,
configuration information related to transmission of a channel state information reference signal,
configuration information related to a beam-related reference signal,
control information related to reporting of a measurement report of the channel state information reference signal, and
control information related to reporting of a measurement report of the beam-related reference signal.

12. A control information transmission method, applied to a terminal, comprising:
receiving first control information in a physical downlink control channel, wherein the first control information is used for indicating a downlink resource area, the downlink resource area is used for receiving the physical downlink control channel and a physical downlink data channel, or for receiving the physical downlink data channel;
receiving second control information in the physical downlink control channel or the physical downlink data channel; and
determining, according to the second control information, whether to receive third control information in the physical downlink data channel wherein the first control information, the second control information, and the third control information are received in a same slot,
wherein in a time domain, a symbol in which an ending position of receiving the third control information is located is prior to a symbol in which a starting position of receiving the downlink data is located, or
the ending position of receiving the third control information and the starting position of receiving the downlink data are located in a same symbol.

13. A control information transmission apparatus, applied to a base station, comprising:
a first transmission module, which is configured to transmit first control information in a physical downlink control channel, wherein the first control information is used for indicating a downlink resource area, the downlink resource area is used for transmitting the physical downlink control channel and a physical downlink data channel, or for transmitting the physical downlink data channel;
a second transmission module, which is configured to transmit second control information in the physical downlink control channel or the physical downlink data channel; and
a third transmission module, which is configured to determine, according to the second control information, whether to transmit third control information in the physical downlink data channel,
wherein the first control information, the second control information, and the third control information are transmitted in a same slot,
wherein in a time domain, a symbol in which an ending position of transmitting the third control information is located is prior to a symbol in which a starting position of transmitting the downlink data is located, or
the ending position of transmitting the third control information and the starting position of transmitting the downlink data are located in a same symbol.

14. A control information transmission apparatus, applied to a terminal, comprising:
a first receiving module, which is configured to receive first control information in a physical downlink control channel, wherein the first control information is used for indicating a downlink resource area, the downlink resource area is used for receiving the physical downlink control channel and a physical downlink data channel, or for receiving the physical downlink data channel;
a second receiving module, which is configured to receive second control information in the physical downlink control channel or the physical downlink data channel; and
a third receiving module, which is configured to determine, according to the second control information, whether to receive third control information in the physical downlink data channel,
wherein the first control information, the second control information, and the third control information are received in a same slot,
wherein in a time domain, a symbol in which an ending position of receiving the third control information is located is prior to a symbol in which a starting position of receiving the downlink data is located, or
the ending position of receiving the third control information and the starting position of receiving the downlink data are located in a same symbol.

## Patentansprüche

1. Verfahren zur Übertragung von Steuerungsinformationen, das auf eine Basisstation angewendet wird, umfassend:
Übertragen erster Steuerungsinformationen in einem physischen Downlink-Steuerungskanal, wobei die ersten Steuerungsinformationen verwendet werden, um einen Downlink-Ressourcenbereich anzugeben, wobei der Downlink-Ressourcenbereich zum Übertragen des physischen Downlink-Steuerungskanals und eines physischen Downlink-Datenkanals, oder zum Übertragen des physischen Downlink-Datenkanals verwendet wird;
Übertragen von zweiten Steuerungsinformationen in dem physischen Downlink-Steuerungskanal oder dem physischen Downlink-Datenkanal; und
Bestimmen, gemäß den zweiten Steuerungsinformationen, ob dritte Steuerungsinformationen in dem physischen Downlink-Datenkanal zu übertragen sind,
wobei die ersten Steuerungsinformationen, die zweiten Steuerungsinformationen und die dritten Steuerungsinformationen in einem gleichen Schlitz übertragen werden,
wobei in einer Zeitdomäne ein Symbol, in dem sich eine Endposition der Übertragung der dritten Steuerungsinformation befindet, vor einem Symbol liegt, in dem sich eine Startposition der Übertragung der Downlink-Daten befindet, oder
die Endposition einer Übertragung der dritten Steuerungsinformationen und die Startposition einer Übertragung der Downlink-Daten sich in einem gleichen Symbol befinden.

2. Verfahren nach Anspruch 1, wobei das Bestimmen, gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal zu übertragen, Übertragen der dritten Steuerungsinformationen und Downlink-Daten in einer Weise von:
Durchführen von Multiplexing des Downlink-Ressourcenbereichs entsprechend dem physischen Downlink-Datenkanal für die dritten Steuerungsinformationen und die Downlink-Daten, und
Zuordnen der dritten Steuerungsinformationen zu einer Position, die zum Übertragen der dritten Steuerungsinformationen in dem Downlink-Ressourcenbereich entsprechend dem physischen Downlink-Datenkanal vorbestimmt ist,
wobei die Position, die zum Übertragen der dritten Steuerungsinformationen in dem Downlink-Ressourcenbereich entsprechend dem physischen Downlink-Datenkanal vorbestimmt ist, durch die Basisstation einem Endgerät anhand einer Funkressourcen-Steuerungsnachricht vorangemeldet wird, oder gemäß einer vordefinierten Regel ohne Nachricht vorab vereinbart wird.

3. Verfahren nach Anspruch 1, wobei das Bestimmen gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal nicht zu übertragen, Übertragen von Downlink-Daten in einer Position, die zum Übertragen der dritten Steuerungsinformationen in dem Downlink-Ressourcenbereich entsprechend dem physischen Downlink-Datenkanal vorbestimmt ist,
wobei die Position, die zum Übertragen der dritten Steuerungsinformationen in dem Downlink-Ressourcenbereich entsprechend dem physischen Downlink-Datenkanal vorbestimmt ist, durch die Basisstation einem Endgerät anhand einer Funkressourcen-Steuerungsnachricht vorangemeldet wird, oder gemäß einer vordefinierten Regel ohne Nachricht vorab vereinbart wird.

4. Verfahren nach Anspruch 1, wobei das Bestimmen gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal nicht zu übertragen, Erzeugen eines oder mehrerer Parameter in den dritten Steuerungsinformationen gemäß einem Standardwert und/oder einer vordefinierten Regel; wobei der Standardwert für das Endgerät durch die Basisstation anhand einer Funkressourcen-Steuerungssignalisierung konfiguriert ist, oder gemäß einer vordefinierten Regel ohne Nachricht vorab vereinbart wird.

5. Verfahren nach Anspruch 1 oder 2, wobei das Bestimmen gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal zu übertragen, Übertragen der dritten Steuerungsinformationen und Downlink-Daten in einer Weise von:
Codieren der dritten Steuerungsinformationen in einem Kanal-Codierungsmodus, der sich von einem Kanal-Codierungsmodus der Downlink-Daten unterscheidet, und
Modulieren der dritten Steuerungsinformationen in einem Modulationsmodus, welcher derselbe wie ein Modulationsmodus der Downlink-Daten ist, und Zuordnen der dritten Steuerungsinformationen zur vorbestimmten Position zum Übertragen;
wobei der Modulationsmodus eines umfasst von: Kodierung durch Quadratur-Phasenumtastung, QPSK, 16-Quadratur-Amplitudenmodulation, QAM, 64-QAM und 256-QAM.

6. Verfahren nach Anspruch 1 oder 2, wobei das Bestimmen gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal zu übertragen, und als Reaktion auf das Bestimmen, dass der physische Downlink-Datenkanal mehr als eine Schicht nutzt, Übertragen der dritten Steuerungsinformationen in jeder der mehr als einen Schicht.

7. Verfahren nach Anspruch 1 oder 2, wobei das Bestimmen gemäß den zweiten Steuerungsinformationen, ob dritte Steuerungsinformationen in dem physischen Downlink-Datenkanal zu übertragen sind, umfasst:
als Reaktion auf das Bestimmen, dass die zweiten Steuerungsinformationen angeben, die dritten Steuerungsinformationen in dem physischen Downlink-Datenkanal zu übertragen, und als Reaktion auf das Bestimmen, dass der physische Downlink-Datenkanal mehr als eine Schicht nutzt, und dass der physische Downlink-Steuerungskanal räumliches Multiplexing durchführt, Übertragen der dritten Steuerungsinformationen und Downlink-Daten in einer Weise von:
Durchführen des räumlichen Multiplexings für die dritten Steuerungsinformationen und die Downlink-Daten in einem höchsten Modulationscodierungsmodus, und
Übertragen der dritten Steuerungsinformationen in jeder Schicht welcher die Downlink-Daten in dem höchsten Modulationscodierungsmodus zugeordnet werden.

8. Verfahren nach Anspruch 1 oder 2, wobei die dritten Steuerungsinformationen und die Downlink-Daten unterschiedliche Leistungsversätze in Bezug auf ein Demodulationsreferenzsignal aufweisen.

9. Verfahren nach Anspruch 1, wobei die zweiten Steuerungsinformationen eine Länge von 1 Bit aufweisen.

10. Verfahren nach Anspruch 1, 2, 3 oder 4 wobei die dritten Steuerungsinformationen mindestens eines umfassen von: Steuerungsinformationen in Bezug auf eine Übertragung eines Downlink-Referenzsignals, und Steuerungsinformationen in Bezug auf eine automatische Hybrid-Wiederholungsanforderungs-, HARQ-Rückkopplung.

11. Verfahren nach Anspruch 1, 2, 3 oder 4 wobei die dritten Steuerungsinformationen mindestens einen der folgenden Parameter umfassen:
Übertragung von Zeitinformationen zum Angeben eines physischen Uplink-Steuerungskanals, welcher Uplink-HARQ-Rückkopplung trägt und den Downlink-Daten entspricht,
Ressourcen-Angabeinformationen zum Angeben des physischen Uplink-Steuerungskanals, welcher Uplink-HARQ-Rückkopplung trägt und den Downlink-Daten entspricht,
Angabe von Informationen zum Angeben einer Position von Uplink-HARQ-Rückkopplungsinformationen entsprechend den aktuellen Downlink-Daten in einer vorbestimmten Sequenz, wobei die vorbestimmte Sequenz eine Vielzahl von Uplink-HARQ-Rückkopplungsinformationen umfasst, die in einem physischen Uplink-Steuerungskanal übertragen werden, der durch die Ressourcen-Angabeinformationen angegeben wird,
Konfigurationsinformationen in Bezug auf eine Übertragung eines Demodulationsreferenzsignals,
Konfigurationsinformationen in Bezug auf eine Übertragung eines Kanalzustandsinformations-Referenzsignals,
Konfigurationsinformationen in Bezug auf ein strahlbezogenes Referenzsignal,
Steuerungsinformationen in Bezug auf das Berichten eines Messberichts des Kanalzustandsinformations-Referenzsignals, und
Steuerungsinformationen in Bezug auf das Berichten eines Messberichts des strahlbezogenen Referenzsignals.

12. Verfahren zur Übertragung von Steuerungsinformationen, das auf ein Endgerät angewendet wird, umfassend:
Empfangen erster Steuerungsinformationen in einem physischen Downlink-Steuerungskanal, wobei die ersten Steuerungsinformationen verwendet werden, um einen Downlink-Ressourcenbereich anzugeben, wobei der Downlink-Ressourcenbereich zum Empfangen des physischen Downlink-Steuerungskanals und eines physischen Downlink-Datenkanals, oder zum Empfangen des physischen Downlink-Datenkanals verwendet wird;
Empfangen von zweiten Steuerungsinformationen in dem physischen Downlink-Steuerungskanal oder dem physischen Downlink-Datenkanal; und
Bestimmen, gemäß den zweiten Steuerungsinformationen, ob dritte Steuerungsinformationen in dem physischen Downlink-Datenkanal zu empfangen sind,
wobei die ersten Steuerungsinformationen, die zweiten Steuerungsinformationen und die dritten Steuerungsinformationen in einem gleichen Schlitz empfangen werden,
wobei in einer Zeitdomäne ein Symbol, in dem sich eine Endposition des Empfangs der dritten Steuerungsinformation befindet, vor einem Symbol liegt, in dem sich eine Startposition des Empfangs der Downlink-Daten befindet, oder
die Endposition des Empfangs der dritten Steuerungsinformationen und die Startposition des Empfangs der Downlink-Daten sich in einem gleichen Symbol befinden.

13. Einrichtung zur Übertragung von Steuerungsinformationen, die auf eine Basisstation angewendet wird, umfassend:
ein erstes Übertragungsmodul, das konfiguriert ist, um erste Steuerungsinformationen in einem physischen Downlink-Steuerungskanal zu übertragen, wobei die ersten Steuerungsinformationen verwendet werden, um einen Downlink-Ressourcenbereich anzugeben, wobei der Downlink-Ressourcenbereich zum Übertragen des physischen Downlink-Steuerungskanals und eines physischen Downlink-Datenkanals, oder zum Übertragen des physischen Downlink-Datenkanals verwendet wird;
ein zweites Übertragungsmodul, das konfiguriert ist, um zweite Steuerungsinformationen in dem physischen Downlink-Steuerungskanal oder dem physischen Downlink-Datenkanal zu übertragen; und
ein drittes Übertragungsmodul, das konfiguriert ist, um gemäß den zweiten Steuerungsinformationen zu bestimmen, ob dritte Steuerungsinformationen in dem physischen Downlink-Datenkanal zu übertragen sind,
wobei die ersten Steuerungsinformationen, die zweiten Steuerungsinformationen und die dritten Steuerungsinformationen in einem gleichen Schlitz übertragen werden,
wobei in einer Zeitdomäne ein Symbol, in dem sich eine Endposition der Übertragung der dritten Steuerungsinformation befindet, vor einem Symbol liegt, in dem sich eine Startposition der Übertragung der Downlink-Daten befindet, oder
die Endposition der Übertragung der dritten Steuerungsinformationen und die Startposition der Übertragung der Downlink-Daten sich in einem gleichen Symbol befinden.

14. Einrichtung zur Übertragung von Steuerungsinformationen, die auf ein Endgerät angewendet wird, umfassend:
ein erstes Empfangsmodul, das konfiguriert ist, um erste Steuerungsinformationen in einem physischen Downlink-Steuerungskanal zu empfangen, wobei die ersten Steuerungsinformationen verwendet werden, um einen Downlink-Ressourcenbereich anzugeben, wobei der Downlink-Ressourcenbereich zum Empfangen des physischen Downlink-Steuerungskanals und eines physischen Downlink-Datenkanals, oder zum Empfangen des physischen Downlink-Datenkanals verwendet wird;
ein zweites Empfangsmodul, das konfiguriert ist, um zweite Steuerungsinformationen in dem physischen Downlink-Steuerungskanal oder dem physischen Downlink-Datenkanal zu empfangen; und
ein drittes Empfangsmodul, das konfiguriert ist, um gemäß den zweiten Steuerungsinformationen zu bestimmen, ob dritte Steuerungsinformationen in dem physischen Downlink-Datenkanal zu empfangen sind,
wobei die ersten Steuerungsinformationen, die zweiten Steuerungsinformationen und die dritten Steuerungsinformationen in einem gleichen Schlitz empfangen werden,
wobei in einer Zeitdomäne ein Symbol, in dem sich eine Endposition des Empfangs der dritten Steuerungsinformation befindet, vor einem Symbol liegt, in dem sich eine Startposition des Empfangs der Downlink-Daten befindet, oder
die Endposition des Empfangs der dritten Steuerungsinformationen und die Startposition des Empfangs der Downlink-Daten sich in einem gleichen Symbol befinden.

## Revendications

1. procédé de transmission d'informations de commande appliqué à une station de base, comprenant :
transmettre des premières informations de commande dans un canal de commande physique de liaison descendante, les premières informations de commande étant utilisées pour indiquer une zone de ressources de liaison descendante, la zone de ressources de liaison descendante étant utilisée pour transmettre le canal de commande physique de liaison descendante et un canal de données physique de liaison descendante, ou pour transmettre le canal de données physique de liaison descendante ;
transmettre des secondes informations de commande dans le canal de commande physique de liaison descendante ou dans le canal de données physique de liaison descendante ; et
déterminer, en fonction des deuxièmes informations de commande, si des troisièmes informations de commande doivent être transmises dans le canal de données de liaison descendante physique,
dans lequel les premières informations de commande, les deuxièmes informations de commande et les troisièmes informations de commande sont transmises dans une même fente,
dans lequel, dans un domaine temporel, un symbole dans lequel se trouve une position de fin de transmission de la troisième information de commande précède un symbole dans lequel se trouve une position de début de transmission des données de liaison descendante, ou
la position de fin d'une transmission des troisièmes informations de commande et la position de début d'une transmission des données de liaison descendante se trouvent dans un même symbole.

2. procédé selon la revendication 1, dans lequel la détermination comprend, selon les deuxièmes informations de commande, si des troisièmes informations de commande doivent être transmises dans le canal de données physique de liaison descendante :
en réponse à la détermination du fait que la deuxième information de commande indique de transmettre la troisième information de commande dans le canal de données de liaison descendante physique, transmettre la troisième information de commande et les données de liaison descendante d'une manière de :
effectuer le multiplexage de la zone de ressources de liaison descendante correspondant au canal de données de liaison descendante physique pour les troisièmes informations de commande et les données de liaison descendante, et
associer les troisièmes informations de commande à une position prédéterminée pour transmettre les troisièmes informations de commande dans la zone de ressources de liaison descendante correspondant au canal de données physique de liaison descendante,
dans lequel la position prédéterminée pour transmettre les troisièmes informations de commande dans la zone de ressources de liaison descendante correspondant au canal de données de liaison descendante physique est annoncée à l'avance par la station de base à un terminal sur la base d'un message de commande de ressources radio, ou est convenue à l'avance conformément à une règle prédéfinie sans message.

3. procédé selon la revendication 1, dans lequel la détermination selon les deuxièmes informations de commande comprend si des troisièmes informations de commande doivent être transmises dans le canal de données de liaison descendante physique :
en réponse à la détermination du fait que la deuxième information de commande indique de ne pas transmettre la troisième information de commande dans le canal de données de liaison descendante physique, transmettre des données de liaison descendante dans une position prédéterminée pour transmettre la troisième information de commande dans la zone de ressources de liaison descendante correspondant au canal de données de liaison descendante physique,
dans lequel la position prédéterminée pour transmettre les troisièmes informations de commande dans la zone de ressources de liaison descendante correspondant au canal de données de liaison descendante physique est annoncée à l'avance par la station de base à un terminal sur la base d'un message de commande de ressources radio, ou est convenue à l'avance conformément à une règle prédéfinie sans message.

4. procédé selon la revendication 1, dans lequel la détermination selon les deuxièmes informations de commande comprend si des troisièmes informations de commande doivent être transmises dans le canal de données de liaison descendante physique :
en réponse à la détermination du fait que les deuxièmes informations de commande indiquent de ne pas transmettre les troisièmes informations de commande dans le canal de données de liaison descendante physique, générer un ou plusieurs paramètres dans les troisièmes informations de commande selon une valeur par défaut et/ou une règle prédéfinie ; dans lequel la valeur par défaut est configurée pour le terminal par la station de base sur la base d'une signalisation de commande de ressources radio, ou est convenue à l'avance selon une règle prédéfinie sans message.

5. procédé selon la revendication 1 ou 2, dans lequel la détermination selon les deuxièmes informations de commande comprend si des troisièmes informations de commande doivent être transmises dans le canal de données de liaison descendante physique :
en réponse à la détermination du fait que la deuxième information de commande indique de transmettre la troisième information de commande dans le canal de données de liaison descendante physique, transmettre la troisième information de commande et les données de liaison descendante d'une manière de :
le codage des troisièmes informations de commande dans un mode de codage de canal qui est différent d'un mode de codage de canal des données de liaison descendante, et
moduler les troisièmes informations de commande dans un mode de modulation qui est le même qu'un mode de modulation des données de liaison descendante, et associer les troisièmes informations de commande à la position prédéterminée pour la transmission ;
le mode de modulation comprenant l'un des modes suivants : Codage par déplacement de phase en quadrature, QPSK, modulation d'amplitude en 16 quadrature, QAM, 64-QAM et 256-QAM.

6. procédé selon la revendication 1 ou 2, dans lequel la détermination selon les deuxièmes informations de commande comprend le fait de savoir si des troisièmes informations de commande doivent être transmises dans le canal de données de liaison descendante physique :
en réponse à la détermination du fait que la deuxième information de commande indique de transmettre la troisième information de commande dans le canal de données physique de liaison descendante, et en réponse à la détermination du fait que le canal de données physique de liaison descendante utilise plus d'une couche, transmettre la troisième information de commande dans chacune des plus d'une couche.

7. procédé selon la revendication 1 ou 2, dans lequel la détermination selon les deuxièmes informations de commande comprend si des troisièmes informations de commande doivent être transmises dans le canal de données de liaison descendante physique :
en réponse à la détermination du fait que la deuxième information de commande indique de transmettre la troisième information de commande dans le canal de données de liaison descendante physique, et en réponse à la détermination du fait que le canal de données de liaison descendante physique utilise plus d'une couche, et que le canal de commande de liaison descendante physique effectue un multiplexage spatial, transmettre la troisième information de commande et les données de liaison descendante d'une manière de :
effectuer le multiplexage spatial pour les troisièmes informations de commande et les données de liaison descendante dans un mode de codage de modulation le plus élevé, et
transmettre la troisième information de commande dans chaque couche à laquelle les données de liaison descendante sont affectées dans le mode de codage de modulation le plus élevé.

8. Procédé selon la revendication 1 ou 2, dans lequel les troisièmes informations de commande et les données de liaison descendante présentent des décalages de puissance différents par rapport à un signal de référence de démodulation.

9. Procédé selon la revendication 1, dans lequel les secondes informations de commande ont une longueur de 1 bit.

10. procédé selon la revendication 1, 2, 3 ou 4, dans lequel les troisièmes informations de commande comprennent au moins l'une des informations suivantes : des informations de commande relatives à une transmission d'un signal de référence de liaison descendante, et des informations de commande relatives à une rétroaction de demande de répétition automatique hybride, HARQ.

11. procédé selon la revendication 1, 2, 3 ou 4 dans lequel les troisièmes informations de commande comprennent au moins un des paramètres suivants :
Transmission d'informations temporelles pour indiquer un canal de commande physique de liaison montante portant le feedback HARQ de liaison montante et correspondant aux données de liaison descendante,
Informations d'indication de ressources pour indiquer le canal de contrôle physique de la liaison montante qui porte le retour HARQ de la liaison montante et correspond aux données de la liaison descendante,
spécifier des informations pour indiquer une position d'informations de rétroaction HARQ de liaison montante correspondant aux données de liaison descendante actuelles dans une séquence prédéterminée, la séquence prédéterminée comprenant une pluralité d'informations de rétroaction HARQ de liaison montante transmises dans un canal de commande de liaison montante physique indiqué par les informations d'indication de ressources,
Informations de configuration relatives à une transmission d'un signal de référence de démodulation,
des informations de configuration relatives à une transmission d'un signal de référence d'informations sur l'état des canaux,
Informations de configuration par rapport à un signal de référence lié au faisceau,
des informations de commande concernant le rapport d'un rapport de mesure du signal de référence d'informations d'état de canal, et
des informations de contrôle concernant le rapport d'un rapport de mesure du signal de référence lié au faisceau.

12. procédé de transmission d'informations de commande appliqué à un terminal, comprenant :
la réception de premières informations de commande dans un canal de commande de liaison descendante physique, les premières informations de commande étant utilisées pour indiquer une zone de ressources de liaison descendante, la zone de ressources de liaison descendante étant utilisée pour recevoir le canal de commande de liaison descendante physique et un canal de données de liaison descendante physique, ou pour recevoir le canal de données de liaison descendante physique ;
recevoir des secondes informations de commande dans le canal de commande de liaison descendante physique ou dans le canal de données de liaison descendante physique ; et
déterminer, en fonction des deuxièmes informations de commande, si des troisièmes informations de commande doivent être reçues dans le canal de données de liaison descendante physique,
dans lequel les premières informations de commande, les deuxièmes informations de commande et les troisièmes informations de commande sont reçues dans un même créneau,
dans lequel, dans un domaine temporel, un symbole dans lequel se trouve une position de fin de réception de la troisième information de commande précède un symbole dans lequel se trouve une position de début de réception des données de liaison descendante, ou
la position de fin de réception de la troisième information de commande et la position de début de réception des données de liaison descendante se trouvent dans un même symbole.

13. dispositif de transmission d'informations de commande appliqué à une station de base, comprenant
un premier module de transmission configuré pour transmettre des premières informations de commande dans un canal de commande physique de liaison descendante, les premières informations de commande étant utilisées pour indiquer une zone de ressources de liaison descendante, la zone de ressources de liaison descendante étant utilisée pour transmettre le canal de commande physique de liaison descendante et un canal de données physique de liaison descendante, ou pour transmettre le canal de données physique de liaison descendante ;
un second module de transmission configuré pour transmettre des secondes informations de commande dans le canal de commande de liaison descendante physique ou le canal de données de liaison descendante physique ; et
un troisième module de transmission configuré pour déterminer, en fonction des deuxièmes informations de commande, si des troisièmes informations de commande doivent être transmises dans le canal de données de liaison descendante physique,
dans lequel les premières informations de commande, les deuxièmes informations de commande et les troisièmes informations de commande sont transmises dans une même fente,
dans lequel, dans un domaine temporel, un symbole dans lequel se trouve une position de fin de transmission de la troisième information de commande précède un symbole dans lequel se trouve une position de début de transmission des données de liaison descendante, ou
la position de fin de transmission de la troisième information de commande et la position de début de transmission des données de liaison descendante se trouvent dans un même symbole.

14. dispositif de transmission d'informations de commande appliqué à un terminal, comprenant
un premier module de réception configuré pour recevoir des premières informations de commande dans un canal de commande physique de liaison descendante, les premières informations de commande étant utilisées pour indiquer une zone de ressources de liaison descendante, la zone de ressources de liaison descendante étant utilisée pour recevoir le canal de commande physique de liaison descendante et un canal de données physique de liaison descendante, ou pour recevoir le canal de données physique de liaison descendante ;
un second module de réception configuré pour recevoir des secondes informations de commande dans le canal de commande de liaison descendante physique ou le canal de données de liaison descendante physique ; et
un troisième module de réception configuré pour déterminer, en fonction des deuxièmes informations de commande, si des troisièmes informations de commande doivent être reçues dans le canal de données de liaison descendante physique,
dans lequel les premières informations de commande, les deuxièmes informations de commande et les troisièmes informations de commande sont reçues dans un même créneau,
dans lequel, dans un domaine temporel, un symbole dans lequel se trouve une position de fin de réception de la troisième information de commande précède un symbole dans lequel se trouve une position de début de réception des données de liaison descendante, ou
la position de fin de réception de la troisième information de commande et la position de début de réception des données de liaison descendante se trouvent dans un même symbole.
